# EUROPÄISCHE PATENTSCHRIFT

(11) **EP 2 722 319 B1**
(45) Veröffentlichungstag und Bekanntmachung des Hinweises auf die Patenterteilung: **03.07.2019**
(21) Anmeldenummer: 13181076.4
(22) Anmeldetag: 20.08.2013
(51) Int. Cl.: C04B 28/04, C04B 28/06, E04B 1/74

(54) **Schall- und/oder Wärmedämmung sowie Wärmedämmsystem**
Acoustic and/or thermal insulation and heat insulation system
Isolation phonique et/ou thermique et système d'isolation thermique

(30) Priorität: 16.10.2012 DE 102012020215
(43) Veröffentlichungstag der Anmeldung: 23.04.2014
(73) Patentinhaber: STO SE & Co. KGaA, 79780 Stühlingen (DE)
(72) Erfinder: Weier, Andreas, 78647 Trossingen (DE); Restle, Christian, 78250 Tengen-Talheim (DE); Holzer, Michael, 78315 Radolfzell (DE)
(74) Vertreter: Gottschalk, Matthias

(56) Entgegenhaltungen:
- WO-A1-96/15998
- WO-A1-2010/126792
- WO-A1-2011/083174
- WO-A2-2006/032655
- DE-A1- 10 211 331
- DE-A1- 19 702 240
- DE-A1- 19 839 295
- KR-A- 20100 002 234

## Beschreibung

Die Erfindung betrifft ein Wärmedämmsystem umfassend eine aus einer Dämmputzzusammensetzung ausgebildete Schall- und/oder Wärmedämmung einer Gebäudewand- oder -decke sowie eine Armierungsschicht aus einer mineralischen Armierungsmasse mit den Merkmalen des Anspruchs 1.

### Stand der Technik

Aerogel-Partikel weisen aufgrund ihrer hohen Porosität eine besonders niedrige Wärmeleitfähigkeit auf, so dass aerogelhaltige Dämmelemente bereits bei geringen Dämmstoffdicken hervorragende Wärmedämmwerte besitzen. Bei Verwendung eines auf Aerogel-Partikel basierenden Dämmstoffs kann demnach die Dämmstoffdicke im Vergleich zu einem Wärmedämmelement aus Polystyrol-Hartschaum halbiert werden.

Aus dem Stand der Technik bekannte, Aerogel-Partikel enthaltende Dämmstoffe liegen als plattenförmige Dämmelemente vor, die zur Wärmedämmung von Gebäuden an eine Gebäudewand oder -decke angebracht und anschließend verputzt oder verkleidet werden. Die Ausbildung derartiger Dämmsysteme erfordert einen gewissen Arbeitsaufwand, da es mehrere aufeinanderfolgende Schichten auszubilden gilt. Ein weiterer Nachteil ist darin zu sehen, dass derartige Dämmsysteme bei Anbringung an einer bereits bestehenden Fassade weit vorbauen, so dass es häufig zu Anschlussproblemen im Bereich der Fenster, Türen und/oder angrenzenden Bauteilen, insbesondere Dächern, kommt. Ferner kann die Einhaltung der gesetzlich vorgeschriebenen Abstandsflächen Probleme bereiten. Schließlich wird durch ein nachträglich aufgebrachtes Dämmsystem der Charakter einer Fassade nicht unwesentlich verändert, so dass Dämmsysteme der vorstehend genannten Art regelmäßig nicht bei historischen bzw. denkmalgeschützten Fassaden zum Einsatz gelangen.

Abhilfe sollen hier Wärmedämmputze schaffen, die Leichtfüllstoffe, beispielsweise EPS-Partikel, zur Herabsetzung der Wärmeleitfähigkeit enthalten und ein- oder mehrlagig aufgetragen werden. Im Vergleich zu plattenförmigen Dämmelementen, die nachträglich verputzt oder verkleidet werden müssen, bauen ein- oder mehrlagig aufgebrachte Wärmedämmputze deutlich geringer vor, so dass es in der Regel keine Anschlussprobleme oder Probleme mit den Abstandsflächen gibt. Ferner bleibt der ursprüngliche Charakter einer Fassade weitgehend erhalten. Die Menge an Leichtfüllstoffen, die zugegeben werden kann, ist jedoch begrenzt. Denn mit zunehmender Menge an Leichtfüllstoffen verringert sich die Festigkeit, insbesondere die Zug- und Druckfestigkeit, und damit die Dauerhaftigkeit eines hieraus hergestellten Dämmputzes. Ferner ist die maximale Schichtstärke, in welcher ein solcher Dämmputz auf eine Gebäudewand oder -decke auftragbar ist, begrenzt. Aus alledem folgt, dass aus herkömmlichen Dämmputzen hergestellte Wärmedämmschichten in der Regel keine zufriedenstellenden Wärmedämmwerte aufweisen. Die Wärmeleitfähigkeit λ herkömmlicher Dämmputze liegt bei 70-90 mW/(mK). Zur Verbesserung der Wärmedämmleistung wird der Dämmputz daher oftmals in mehreren Lagen aufgetragen. Da ferner die Anzahl der Lagen aus Stabilitätsgründen begrenzt ist, werden keine Gesamtschichtstärken erreicht, die zufriedenstellende Wärmedämmwerte gewährleisten.

Aus der DE 102 11 331 A1 geht eine spritzbare Schall- und/oder Wärmedämmung hervor, die Aerogel-Partikel als Leichtfüllstoff enthält. Durch den Austausch des Leichtfüllstoffs kann die Wärmedämmleistung des Dämmputzes bereits deutlich verbessert werden. Da Aerogel-Partikel ein geringeres Gewicht als die üblicherweise in Dämmputzen zum Einsatz gelangenden Leichtfüllstoffe aufweisen, kann ferner die Menge der zugegebenen Aerogel-Partikeln erhöht werden. Diese Maßnahme führt zu einer weiteren Verbesserung der Wärmedämmwerte. Die Bindung der Aerogel-Partikel untereinander wird durch ein organisches Bindemittel bewirkt, welches eine die Aerogel-Partikel umschließende, durchgehende Matrix ausbildet. Vorzugsweise wird ein physikalisch oder chemisch härtender Ein- oder Mehrkomponenten-Klebstoff als Bindemittel eingesetzt. Der Einsatz eines solchen Bindemittels erschwert jedoch die Verarbeitung des Dämmputzes, da spezielle Auftragsverfahren erforderlich sind. Als Nachteil erweist sich ferner, dass organische Bindemittel brennbar sind, so dass der Einsatzbereich derartiger Dämmputze beschränkt ist.

Aus der WO 2010/126792 A1 ist eine Putzzusammensetzung auf Basis eines zementösen Bindemittels bekannt, die zusätzlich 40-95 Vol.% Aerogel-Partikel enthält. Diese Druckschrift offenbart kein Dämmsystem mit einer Dämmputzschicht und einer Armierungsschicht.

Der Erfindung liegt die Aufgabe zugrunde, ein Wärmedämmsystem zur Schall- und/oder Wärmedämmung einer Gebäudewand oder -decke anzugeben, welches leicht zu verarbeiten ist und die Ausbildung eines Dämmputzes mit hervorragenden Wärmedämmwerten ermöglicht. Die aus einer solchen Dämmputzzusammensetzung ausgebildete Schall- und/oder Wärmedämmung soll zudem einen Beitrag zum Brandschutz leisten.

Die Aufgabe wird gelöst durch ein Wärmedämmsystem mit den Merkmalen des Anspruchs 1. Vorteilhafte Weiterbildungen der Erfindung sind in den Unteransprüchen angegeben.

### Offenbarung der Erfindung

Die zur Ausbildung einer Schall- und/oder Wärmedämmung einer Gebäudewand- oder -decke vorgeschlagene Dämmputzzusammensetzung umfasst Aerogel-Partikel und wenigstens ein Bindemittel, wobei erfindungsgemäß wenigstens ein zementöses Bindemittel, insbesondere eine zementöse Bindemittel-Kombination enthalten ist. Die Aerogel-Partikel und das zementöse Bindemittel können werkseits oder bauseits gemischt und/oder mit Wasser zu einer pastösen Masse verarbeitet werden, so dass die trockene Zusammensetzung bzw. die pastöse Masse ggf. erst bauseits hergestellt wird. Das heißt, dass ab Werk entweder sämtliche oder zumindest ein Teil der Ausgangsstoffe der Zusammensetzung als Trockenmischung auf die Baustelle geliefert werden, welche dann vor Ort mit den übrigen Ausgangsstoffen und/oder Wasser gemischt werden, oder zumindest ein Teil der Ausgangsstoffe bereits als pastöse Masse in Gebinden auf die Baustelle geliefert werden, welcher dann vor Ort die übrigen Ausgangsstoffe zugegeben werden. Vorzugsweise liegt die Zusammensetzung als werkseits hergestellte Trockenmischung vor, der nur noch Wasser und/oder eine weitere Trockenkomponente zugegeben werden muss. Die Zugabe von Wasser und/oder der weiteren Trockenkomponente erfolgt dabei weiterhin vorzugsweise erst kurz vor dem Auftragen auf das zu dämmende Bauteil.

Um im Fall einer als Trockenmischung vorliegenden Dämmputzzusammensetzung eine verarbeitungsfertige pastöse Masse zu erhalten, die auf ein zu dämmendes Bauteil aufgebracht werden kann, muss die Trockenmischung zunächst mit Wasser gemischt werden. Die auf diese Weise erhaltene pastöse Masse kann dann maschinell, vorzugsweise mittels eines geeigneten Spritzwerkzeuges, oder manuell, mittels Kelle oder Traufel, auf das zu dämmende Bauteil aufgetragen werden. D.h., dass die Verarbeitung der Dämmputzzusammensetzung sich nicht von der einer herkömmlichen Putzzusammensetzung unterscheidet und auch der Auftrag der Zusammensetzung in gewohnter Weise unter Verwendung der üblicherweise eingesetzten Werkzeuge erfolgen kann. Dies gilt entsprechend für die Dämmputzzusammensetzung, die ab Werk bereits als pastöse Masse auf die Baustelle geliefert wird und der ggf. vor Ort nur noch eine weitere Komponente zugegeben werden muss.

Nach dem Auftrag auf ein zu dämmendes Bauteil härtet die pastöse Masse aus, wobei das enthaltene zementöse Bindemittel bzw. die enthaltene zementöse Bindemittel-Kombination eine Bindung der Aerogel-Partikel untereinander bewirkt. Die auf diese Weise erhaltene Schall- und/oder Wärmedämmung weist nicht nur eine hohe mechanische Festigkeit, insbesondere Zug- und Druckfestigkeit, sondern ferner ein verbessertes Brandverhalten im Hinblick auf den Brandschutz aus. Denn aufgrund der enthaltenen zementösen Bindemittel, welche im Unterschied zu organischen Bindemitteln nicht brennbar sind, ist die aus der Dämmputzzusammensetzung ausgebildete Schall- und/oder Wärmedämmung ebenfalls nicht brennbar, sofern auf die Zugabe organischer Bindemittel und/oder Füllstoffe verzichtet wird. Dies schließt nicht aus, dass Aerogel-Partikel verwendet werden, die - gleichwohl sie zu den anorganischen Füllstoffen gehören - geringe Mengen an Organik enthalten.

Zementöse Bindemittel weisen gegenüber organischen Bindemitteln zudem den Vorteil auf, dass sie weniger zur Film- bzw. Hautbildung neigen. Damit ist sichergestellt, dass eine auf eine Gebäudewand oder -decke aufgebrachte Dämmputzschicht beim Aushärten vollständig durchtrocknet. Aus diesem Grund kann eine zementös gebundene Putzmasse in einer deutlich größeren Schichtstärke als eine organisch gebundene Putzmasse aufgetragen werden. Dies wiederum vereinfacht die Verarbeitung der Dämmputzzusammensetzung, da der Auftrag in wenigen Lagen ggf. in nur einer Lage erfolgen kann.

Bevorzugt beträgt der Anteil des zementösen Bindemittels oder der zementösen Bindemittel-Kombination 20-75 Gew.-%, vorzugsweise 25-70 Gew.-%, weiterhin vorzugsweise 30-60 Gew.-% bezogen auf das Trockengewicht der Zusammensetzung. Je geringer der Bindemittelanteil, desto höher die Wärmedämmleistung einer hieraus hergestellten Schall- und/oder Wärmedämmung, je höher der Bindemittelanteil, desto größer die Festigkeit und Brandbeständigkeit der hieraus hergestellten Schall- und/oder Wärmedämmung. Da die Dämmputzzusammensetzung im Unterschied zu herkömmlichen Dämmputzzusammensetzungen jedoch einen Auftrag in einer größeren Gesamtschichtstärke ermöglicht, kann ein geringerer Anteil an Aerogel-Partikeln durch die Auftragsstärke kompensiert werden.

Bevorzugt ist bzw. sind Portlandzement und/oder ein Portlandkompositzement, insbesondere Weißzement, als zementöses Bindemittel enthalten. Weiterhin bevorzugt ist 0-75 Gew.-%, vorzugsweise 0-70 Gew.-%, weiterhin vorzugsweise 0-60 Gew.-% Portlandzement und/oder Portlandkompositzement, insbesondere Weißzement, bezogen auf das Trockengewicht der Zusammensetzung enthalten. Portlandzement bzw. Portlandkompositzement weist eine niedrige Feuchteempfindlichkeit, eine hohe Beständigkeit sowie einen günstigen Preis auf. Als nachteilig erweist sich jedoch seine lange Trocknungszeit und damit schlechte Überarbeitbarkeit.

Alternativ oder ergänzend wird daher vorgeschlagen, dass Calciumaluminatzement und/oder Calciumsulfoaluminatzement, insbesondere Tonerdezement, als zementöses Bindemittel enthalten ist bzw. sind. Bevorzugt ist 0-75 Gew.-%, vorzugsweise 0-70 Gew.-%, weiterhin vorzugsweise 0-60 Gew.-% Calciumaluminatzement und/oder Calciumsulfoaluminatzement, insbesondere Tonerdezement, bezogen auf das Trockengewicht der Zusammensetzung enthalten. Calciumaluminatzement bzw. Calciumsulfoaluminatzement weist gegenüber (reinem) Portlandzement bzw. Portlandkompositzement eine deutlich kürzere Trocknungszeit auf. Allerdings ist Calciumaluminatzement bzw. Calciumsulfoaluminatzement teurer als Portlandzement bzw. Portlandkompositzement.

Als besonders vorteilhaft wird eine Dämmputzzusammensetzung angesehen, die sowohl Portlandzement bzw. Portlandkompositzement als auch Calciumaluminatzement bzw. Calciumsulfoaluminatzement enthält. Die Verwendung einer solchen Bindemittel-Kombination gewährleistet einerseits eine schnelle Trocknung, andererseits eine hohe Beständigkeit eines hieraus hergestellten Dämmputzes. Die schnelle Trocknung ermöglicht zudem die Realisierung von Schichtstärken, die deutlich über den für Zementputze üblichen 20-30 mm liegen. Dadurch kann die Verarbeitung der Dämmputzzusammensetzung weiter vereinfacht werden, da bereits ein einlagiger Dämmputz aus einer erfindungsgemäßen Dämmputzzusammensetzung eine effektive Schall- und/oder Wärmedämmung bewirkt.

Bei Verwendung einer solchen Bindemittel-Kombination sind demnach synergetische Effekte erzielbar, die insbesondere das Abbindeverhalten einer solchen Dämmputzzusammensetzung betreffen. Ferner kann über die jeweiligen Anteile der verschiedenen zementösen Bindemittel das Abbindeverhalten beeinflusst und damit optimal eingestellt werden. Dies gilt ferner für die Festigkeitseigenschaften eines hieraus hergestellten Dämmputzes.

Portlandzement bzw. Portlandkompositzement enthält wenigstens einen Sulfatträger, der Einfluss auf das Abbindeverhalten der Bindemittel-Kombination besitzt. In Kombination mit Calciumaluminatzement bzw. Calciumsulfoaluminatzement können die jeweiligen Anteile der Bindemittel derart aufeinander abgestimmt werden, dass die Abbindezeit einer Dämmputzschicht optimiert wird. Dabei kann auch die Schichtstärke der Dämmputzschicht Berücksichtigung finden. Die Verwendung einer solchen Bindemittel-Kombination in einer Dämmputzzusammensetzung ermöglicht demzufolge die Ausbildung eines besonders schnell abbindenden und dennoch vollständig durchtrocknenden Dämmputzes, der zudem strapazierfähig und beständig ist.

Gemäß einer bevorzugten Ausführungsform der Erfindung ist wenigstens ein Sulfatträger, beispielsweise Calciumsulfat, enthalten. Der Sulfatträger kann Bestandteil des zementösen Bindemittels oder der zementösen Bindemittelkombination und/oder zusätzlich zugegeben worden sein. Insgesamt beträgt der in der Dämmputzzusammensetzung enthaltene Sulfatträgeranteil bevorzugt maximal 30 Gew.-%, vorzugsweise 1-20 Gew.-%, weiterhin vorzugsweise 2-15 Gew.-% bezogen auf das Trockengewicht der Zusammensetzung. Dabei hängt die zusätzliche Zugabe eines Sulfatträgers von der bereits im zementösen Bindemittel bzw. in der zementösen Bindemittel-Kombination enthaltenen Menge eines oder mehrerer Sulfatträger ab. Da eine zu große Menge an Sulfatträgern die Wasser- und Feuchtebeständigkeit eines Dämmputzes verringern kann, gilt es eine Überdosierung zu verhindern.

Um hervorragende Wärmedämmwerte eines aus der Dämmputzzusammensetzung hergestellten Dämmputzes zu erzielen, wird ferner vorgeschlagen, dass 20-80 Gew.-%, vorzugsweise 30-70 Gew.-%, weiterhin vorzugsweise 40-60 Gew.-% Aerogel-Partikel bezogen auf das Trockengewicht der Zusammensetzung enthalten sind. Die Aerogel-Partikel besitzen dabei bevorzugt eine mittlere Partikelgröße zwischen 0,1 mm und 5 mm.

Ferner kann wenigstens ein Verzögerer in der Dämmputzzusammensetzung enthalten sein, um den Abbindeprozess zeitweise zu blockieren. Dies kann beispielsweise im Hinblick auf eine längere Verarbeitungszeit und/oder Überarbeitungszeit wünschenswert sein. Darüber hinaus kann die Lagerstabilität der Zusammensetzung durch Zugabe eines Verzögerers erhöht werden. Zum Beispiel können Borsäure und/oder Borate als Verzögerer in der Zusammensetzung enthalten sein. Bevorzugt werden Weinsäure, Tartrate, Citronensäure und/oder Citrate als Verzögerer eingesetzt.

Alternativ oder ergänzend kann als Beschleuniger eine Alkali- und/oder Erdalkaliverbindung, enthalten sein. Der Beschleuniger kann kurz vor dem Auftragen der Putzzusammensetzung auf ein zu dämmendes Bauteil der Dämmputzzusammensetzung zugegeben werden, um beispielsweise die Wirkung eines ferner enthaltenen Verzögerers aufzuheben. Als Beschleuniger können Oxide, Hydroxide, Carbonate und/oder Sulfate sowie Mischungen hieraus eingesetzt werden.

Besonders bevorzugt wird Lithiumhydroxid, Lithiumcarbonat und/oder Lithiumsulfat als Beschleuniger zugegeben.

Sofern sowohl ein Verzögerer als auch ein Beschleuniger enthalten sind, sind diese vorzugsweise in unterschiedlichen Komponenten der Dämmputzzusammensetzung enthalten, die erst kurz vor dem Auftragen auf den zu dämmenden Untergrund gemischt werden. Mittels des Beschleunigers lässt sich dann die Wirkung des Verzögerers aufheben, so dass weiterhin eine schnell und vollständig durchtrocknende Dämmschicht herstellbar ist. In diesem Fall liegt die Dämmputzzusammensetzung vorzugsweise als zweikomponentige Zusammensetzung vor. Weiterhin bevorzugt ist der Verzögerer der Komponente zugegeben, welche das zementöse Bindemittel oder die zementöse Bindemittel-Kombination enthält. Der Verzögerer vermag auf diese Weise die Lagerstabilität der zementhaltigen Komponente zu erhöhen. Ferner kann die weitere, den Beschleuniger enthaltende Komponente allein aus dem Beschleuniger bestehen.

Weiterhin bevorzugt ist wenigstens ein Additiv, insbesondere ein Hydrophobierungsmittel, ein Luftporenbildner, ein Wasserrückhaltemittel und/oder ein rheologisches Additiv, in der Dämmputzzusammensetzung enthalten. Über die Zugabe wenigstens eines Additivs können die Verarbeitungseigenschaften der Dämmputzzusammensetzung weiter optimiert werden.

Darüber hinaus können - neben den Aerogel-Partikeln - weitere Füllstoffe, beispielsweise silikatische und/oder carbonatische Füllstoffe, enthalten sein.

Bei einem Verfahren zur Ausbildung einer Schall- und/oder Wärmedämmung einer Gebäudewand oder -decke wird die Dämmputzzusammensetzung unter Zugabe von Wasser und/oder wenigstens eines weiteren Ausgangsstoffs zu einer pastösen Masse verarbeitet und anschließend manuell oder maschinell, vorzugsweise mittels eines Spritzverfahrens, in einer Schichtstärke von 20-120 mm, vorzugsweise 25-100 mm, weiterhin vorzugsweise 30-80 mm, auf die Gebäudewand oder -decke ein- oder mehrlagig aufgetragen wird. Nach dem Aushärten der pastösen Masse erhält man einen Dämmputz, der eine effektive Schall- und/oder Wärmedämmung der Gebäudewand oder -decke bewirkt. Sofern der Dämmeffekt verstärkt werden soll, wird die pastöse Masse in wenigstens einer weiteren Lage aufgebracht. Enthält die Dämmputzzusammensetzung, wie vorgeschlagen, eine schnell abbindende Bindemittel-Kombination, kann der erneute Auftrag bereits nach relativ kurzer Trocknungszeit erfolgen.

Es ist dabei vorteilhaft, wenn die Aerogel-Partikel der Dämmputzzusammensetzung erst kurz vor, während oder nach der Zugabe von Wasser zugegeben und mit den übrigen Ausgangsstoffen gemischt werden. Vorzugsweise wird zum Mischen zumindest eines Teils der Ausgangsstoffe eine Förder- und Mischvorrichtung verwendet, die weiterhin vorzugsweise an eine Spritzvorrichtung anschließbar ist. Im Rahmen dieses Verfahrens ist es möglich, die Aerogel-Partikel zum Schluss zuzugeben, nachdem die übrigen Ausgangsstoffe unter Zugabe von Wasser bereits über die Förder- und Mischeinrichtung gemischt worden sind. Dadurch ist sichergestellt, dass die Aerogel-Partikel beim Förder- und Mischvorgang nicht zerrieben werden. Besonders bevorzugt kommt daher ein herkömmliches zweistufiges Mischverfahren zum Einsatz.

Alternativ kann der Auftrag der Dämmputzzusammensetzung auch in einem Trockenspritzverfahren entsprechend dem in der DE 102 11 331 A1 beschriebenen Verfahren erfolgen. Zwar erfordert der Einsatz eines solchen Verfahrens einen erhöhten Arbeitsaufwand, im Vergleich zum Arbeitsaufwand, den die Ausbildung eines herkömmlichen Wärmedämmverbundsystems erfordert, das eine aus einem plattenförmigen Wärmedämmmaterial hergestellte Dämmschicht sowie eine hierauf aufgebrachte mehrlagige Putzschicht umfasst, ist dieser jedoch weiterhin gering.

Ferner wird eine Schall- und/oder Wärmedämmung aus der Dämmputzzusammensetzung beschrieben, wobei die Schall- und/oder Wärmedämmung eine Wärmeleitfähigkeit λ ≤ 40 mW/(mK), vorzugsweise λ ≤ 35 mW/(mK), weiterhin vorzugsweise λ ≤ 30 mW/(mK), besitzt und/oder nicht brennbar ist. Die Wärmeleitfähigkeit λ hängt insbesondere von dem in der Zusammensetzung enthaltenen Anteil der Aerogel-Partikel ab. Darüber hinaus kann die Wärmedämmleistung über die Gesamtschichtstärke des ein- oder mehrlagig aufgebrachten Dämmputzes beeinflusst werden. Die Einstufung des Dämmputzes in die Baustoffklasse "nicht brennbar", d.h. in die Baustoffklasse A, hängt von der Wahl der Bindemittel und der übrigen Füllstoffe ab, welche vorliegend bevorzugt keine organischen Bestandteile enthalten.

Soweit organische Bestandteile unvermeidbar enthalten sind, ist deren Anteil derart gering, dass das Brandverhalten - wenn überhaupt - nur unwesentlich beeinflusst wird. Beispielsweise kann die Zugabe bestimmter Additive zu einem gewissen Anteil organischer Bestandteile führen.

Die Schall- und/oder Wärmedämmung kann auf einer Außenseite oder Innenseite eines raumbegrenzenden Bauteils ausgebildet werden. D.h., dass die Schall- und/oder Wärmedämmung sowohl eine Innendämmung als auch eine Außendämmung darstellen kann.

Das erfindungsgemäße Wärmedämmsystem umfasst eine Schall- und/oder Wärmedämmung aus der Dämmputzzusammensetzung und eine Armierungsschicht aus einer mineralischen Armierungsmasse. Das demzufolge mehrschichtige System bildet eine erste Schicht zur Schall- und/oder Wärmedämmung aus, die über eine weitere, auf die erste Schicht aufgebrachte Armierungsschicht zusätzlich armiert ist. Eine solche mehrschichtige Beschichtung erweist sich als mechanisch besonders stabil, so dass besonders hohe Gesamtschichtstärken erzielbar sind. Zur Ausbildung der Armierungsschicht wird die mineralische Armierungsmasse vorzugsweise erst nach dem vollständigen Aushärten der Schall- und/oder Wärmedämmschicht auf diese aufgetragen. Weiterhin vorzugsweise wird die ausgehärtete Schall- und/oder Wärmedämmschicht vor dem Auftrag der Armierungsmasse geglättet. Das Glätten kann beispielsweise durch Schleifen erfolgen.

Die Schichtstärke der Armierungsschicht beträgt bevorzugt 4-12 mm, insbesondere 5-8 mm. Einschließlich der Wärmedämmschicht werden auf diese Weise die erfindungsgemäßen Gesamtschichtstärken von etwa 24-132 mm erreicht.

Die Verwendung einer mineralischen Armierungsmasse zur Ausbildung der Armierungsschicht soll Spannungen zwischen den Schichten entgegenwirken, die auf Elastizitätsunterschiede zurückzuführen sind. Da eine aus der Dämmputzzusammensetzung ausgebildete Schall- und/oder Wärmedämmschicht eher spröde ist, erweist sich eine hierauf aufgebrachte mineralische Armierungsmasse, die im Vergleich zu einer organischen Armierungsmasse deutlich weniger elastisch ist, als notwendig.

Bevorzugt umfasst das Wärmedämmsystem ferner ein Armierungsgewebe, das in die mineralische Armierungsschicht eingelegt ist. Durch das eingelegte Armierungsgewebe wird die mechanische Stabilität des Wärmedämmsystems, umfassend eine Schall und/oder Wärmedämmschicht und eine Armierungsschicht, nochmals erhöht.

Die Erfindung wird nachfolgend anhand bevorzugter Ausführungsbeispiele der Dämmputzzusammensetzung näher beschrieben.

### Beispiel 1

| | |
|---|---|
| 50 Gew.-% | Aerogel-Partikel |
| 15 Gew.-% | Portlandzement |
| 25 Gew.-% | Tonerdezement |
| 5 Gew.-% | Anhydrit |
| 0,5 Gew.-% | Verzögerer |
| 0,5 Gew.-% | Beschleuniger |
| 4 Gew.-% | Additive |

werden unter Zugabe von Wasser zu einer pastösen Masse verarbeitet, wobei die Aerogel-Partikel erst zum Schluss untergemischt werden. Eine aus einer solchen Dämmputzzusammensetzung hergestellte Schall- und/oder Wärmedämmschicht besitzt eine Wärmeleitfähigkeit nach DIN EN 12667 von 0,028 W/(mK).

### Beispiel 2

| | |
|---|---|
| 55 Gew.-% | Aerogel-Partikel |
| 20 Gew.-% | Portlandzement |
| 20 Gew.-% | Calciumsulfoaluminatzement |
| 0,5 Gew.-% | Verzögerer |
| 0,5 Gew.-% | Beschleuniger |
| 4 Gew.-% | Additive |

werden unter Zugabe von Wasser zu einer pastösen Masse verarbeitet, wobei die Aerogel-Partikel erst zum Schluss untergemischt werden. Eine aus einer solchen Dämmputzzusammensetzung hergestellte Schall- und/oder Wärmedämmschicht besitzt eine Wärmeleitfähigkeit nach DIN EN 12667 von 0,026 W/(mK).

## Patentansprüche

1. Wärmedämmsystem umfassend eine aus einer Dämmputzzusammensetzung ausgebildete Schall- und/oder Wärmedämmung einer Gebäudewand oder -decke sowie eine Armierungsschicht aus einer mineralischen Armierungsmasse, wobei die Dämmputzzusammensetzung Aerogel-Partikel und wenigstens ein zementöses Bindemittel, insbesondere eine zementöse Bindemittel-Kombination sowie einen Beschleuniger enthält, und die Gesamtschichtstärke des Wärmedämmsystems 24-132 mm beträgt.

2. Wärmedämmsystem nach Anspruch 1,
**dadurch gekennzeichnet, dass** der Anteil des zementösen Bindemittels oder der zementösen Bindemittel-Kombination 20-75 Gew.-%, vorzugsweise 25-70 Gew.-%, weiterhin vorzugsweise 30-60 Gew.-% bezogen auf das Trockengewicht der Zusammensetzung beträgt.

3. Wärmedämmsystem nach Anspruch 1 oder 2,
**dadurch gekennzeichnet, dass** 0-75 Gew.-%, vorzugsweise 0-70 Gew.-%, weiterhin vorzugsweise 0-60 Gew.-% Portlandzement und/oder Portlandkompositzement, insbesondere Weißzement, bezogen auf das Trockengewicht der Zusammensetzung enthalten ist.

4. Wärmedämmsystem nach einem der vorhergehenden Ansprüche,
**dadurch gekennzeichnet, dass** 0-75 Gew.-%, vorzugsweise 0-70 Gew.-%, weiterhin vorzugsweise 0-60 Gew.-% Calciumaluminatzement und/oder Calciumsulfoaluminatzement, insbesondere Tonerdezement, bezogen auf das Trockengewicht der Zusammensetzung enthalten ist.

5. Wärmedämmsystem nach einem der vorhergehenden Ansprüche,
**dadurch gekennzeichnet, dass** wenigstens ein Sulfatträger, beispielsweise Calciumsulfat, enthalten ist, wobei der Sulfatträgeranteil bevorzugt maximal 30 Gew.-%, vorzugsweise 1-20 Gew.-%, weiterhin vorzugsweise 2-15 Gew.-% bezogen auf das Trockengewicht der Zusammensetzung beträgt.

6. Wärmedämmsystem nach einem der vorhergehenden Ansprüche,
**dadurch gekennzeichnet, dass** 20-80 Gew.-%, vorzugsweise 30-70 Gew.-%, weiterhin vorzugsweise 40-60 Gew.-% Aerogel-Partikel bezogen auf das Trockengewicht der Zusammensetzung enthalten sind, wobei die Aerogel-Partikel bevorzugt eine mittlere Partikelgröße zwischen 0,1 mm und 5 mm besitzen.

7. Wärmedämmsystem nach einem der vorhergehenden Ansprüche,
**dadurch gekennzeichnet, dass** wenigstens ein Verzögerer, beispielsweise ein Tartrat und/oder Citrat, und/oder eine Alkali- und/oder Erdalkaliverbindung als Beschleuniger enthalten sind.

8. Wärmedämmsystem nach einem der vorhergehenden Ansprüche,
**dadurch gekennzeichnet, dass** wenigstens ein Additiv, insbesondere ein Hydrophobierungsmittel, ein Luftporenbildner, ein Wasserrückhaltemittel und/oder ein rheologisches Additiv, enthalten ist.

9. Wärmedämmsystem nach einem der vorhergehenden Ansprüche,
**dadurch gekennzeichnet, dass** die Schichtstärke der Armierungsschicht 4-12 mm, vorzugsweise 5-8 mm, beträgt.

10. Wärmedämmsystem nach einem der vorhergehenden Ansprüche,
**dadurch gekennzeichnet, dass** das System ferner ein in die Armierungsschicht eingelegtes Armierungsgewebe umfasst.

## Claims

1. A thermal insulation system comprising an acoustic and/or thermal insulation for a wall or ceiling of a building, formed from an insulating plaster composition as well as a reinforcing layer formed from a mineral reinforcing compound, wherein the insulating plaster composition contains aerogel particles and at least one cement-containing binder, in particular a cement-containing binder combination, as well as an accelerator, and the total layer thickness of the thermal insulation system is 24-132 mm.

2. The thermal insulation system as claimed in claim 1,
**characterized in that** the proportion of the cement-containing binder or of the cement-containing binder combination is 20-75% by weight, preferably 25-70% by weight, more preferably 30-60% by weight, with respect to the dry weight of the composition.

3. The thermal insulation system as claimed in claim 1 or claim 2,
**characterized in that** it contains 0-75% by weight, preferably 0-70% by weight, more preferably 0-60% by weight of Portland cement and/or Portland composite cement, in particular white cement, with respect to the dry weight of the composition.

4. The thermal insulation system as claimed in one of the preceding claims,
**characterized in that** it contains 0-75% by weight, preferably 0-70% by weight, more preferably 0-60% by weight of calcium aluminate cement and/or calcium sulphoaluminate cement, in particular high alumina cement, with respect to the dry weight of the composition.

5. The thermal insulation system as claimed in one of the preceding claims,
**characterized in that** it contains at least one sulphate carrier, for example calcium sulphate, wherein the proportion of sulphate carrier is preferentially a maximum of 30% by weight, preferably 1-20% by weight, more preferably 2-15% by weight with respect to the dry weight of the composition.

6. The thermal insulation system as claimed in one of the preceding claims,
**characterized in that** it contains 20-80% by weight, preferably 30-70% by weight, more preferably 40-60% by weight of aerogel particles with respect to the dry weight of the composition, wherein the aerogel particles preferably have a mean particle size of between 0.1 mm and 5 mm.

7. The thermal insulation system as claimed in one of the preceding claims,
**characterized in that** it contains at least one retarder, for example a tartrate and/or citrate, and/or an alkali and/or alkaline earth compound as an accelerator.

8. The thermal insulation system as claimed in one of the preceding claims,
**characterized in that** it contains at least one additive, in particular a waterproofing agent, an air entraining agent, a water retention agent and/or a rheological additive.

9. The thermal insulation system as claimed in one of the preceding claims,
**characterized in that** the thickness of the reinforcing layer is 4-12 mm, preferably 5-8 mm.

10. The thermal insulation system as claimed in one of the preceding claims,
**characterized in that** the system further comprises a reinforcing fabric inserted into the reinforcing layer.

## Revendications

1. Système d'isolation thermique, comprenant une isolation phonique et/ou thermique, qui est destinée à un mur ou un plafond d'un immeuble et qui est formée à partir d'une composition de crépi isolant, et une couche de renforcement qui est constituée d'une masse de renforcement minérale, la composition de crépi isolant contenant des particules d'aérogel et au moins un liant cimenteux, notamment une combinaison de liants cimenteuse, ainsi qu'un agent accélérateur, le système d'isolation thermique présentant une épaisseur de couche totale comprise entre 24 et 132 mm.

2. Système d'isolation thermique selon la revendication 1,
**caractérisé en ce que** la proportion du liant cimenteux, ou de la combinaison de liants cimenteuse, est comprise entre 20 et 75 % en poids, de préférence entre 25 et 70 % en poids, de manière encore préférée entre 30 et 60 % en poids, par rapport au poids sec de la composition.

3. Système d'isolation thermique selon les revendications 1 ou 2,
**caractérisé en ce que** la composition contient, par rapport à son poids sec, 0 à 75 % en poids, de préférence 0 à 70 % en poids, de manière encore préférée 0 à 60 % en poids de ciment Portland et/ou de ciment Portland composé, s'agissant notamment de ciment blanc.

4. Système d'isolation thermique selon l'une des revendications précédentes,
**caractérisé en ce que** la composition contient, par rapport à son poids sec, 0 à 75 % en poids, de préférence 0 à 70 % en poids, de manière encore préférée 0 à 60 % en poids de ciment d'aluminates de calcium et/ou de ciment de sulfo-aluminates de calcium, s'agissant notamment de ciment alumineux.

5. Système d'isolation thermique selon l'une des revendications précédentes,
**caractérisé en ce qu'**il contient au moins une charge sulfatée, par exemple du sulfate de calcium, la proportion de la charge sulfatée étant préférentiellement inférieure ou égale à 30 % en poids et de préférence comprise entre 1 et 20 % en poids, de manière encore préférée entre 2 et 15 % poids, par rapport au poids sec de la composition.

6. Système d'isolation thermique selon l'une des revendications précédentes,
**caractérisé en ce qu'**il contient 20 à 80 % en poids, de préférence 30 à 70 % en poids, de manière encore préférée 40 à 60 % en poids, de particules d'aérogel, par rapport au poids sec de la composition, les particules d'aérogel ayant préférentiellement une taille des particules moyenne comprise entre 0,1 mm et 5 mm.

7. Système d'isolation thermique selon l'une des revendications précédentes,
**caractérisé en ce qu'**il contient au moins un agent retardateur, s'agissant par exemple d'un tartrate et/ou citrate, et/ou un composé alcalin et/ou alcalinoterreux en tant qu'agent accélérateur.

8. Système d'isolation thermique selon l'une des revendications précédentes,
**caractérisé en ce qu'**il contient au moins un additif, s'agissant notamment d'un agent d'hydrophobation, d'un agent formant des pores d'air, d'un agent de rétention d'eau et/ou d'un additif rhéologique.

9. Système d'isolation thermique selon l'une des revendications précédentes,
**caractérisé en ce que** l'épaisseur de couche de la couche de renforcement est comprise entre 4 et 12 mm, de préférence entre 5 et 8 mm.

10. Système d'isolation thermique selon l'une des revendications précédentes,
**caractérisé en ce que** le système comprend en outre un tissu de renforcement qui est intégré à la couche de renforcement.
